# EUROPEAN PATENT SPECIFICATION

(11) **EP 2 751 184 B1**
(45) Date of publication and mention of the grant of the patent: **26.04.2017**
(21) Application number: 12731885.5
(22) Date of filing: 26.06.2012
(51) Int. Cl.: C08K 5/103, C08L 15/02, C08L 27/12

(54) **CURABLE FLUOROELASTOMER COMPOSITION AND HOT AIR HOSE MADE THEREFROM**
HÄRTBARE FLUORELASTOMERZUSAMMENSETZUNG UND DARAUS HERGESTELLTER HEISSLUFTSCHLAUCH
COMPOSITION D'ÉLASTOMÈRE FLUORÉ POUVANT DURCIR ET TUYAU SOUPLE POUR AIR CHAUD FABRIQUÉ AVEC CETTE COMPOSITION

(30) Priority: 31.08.2011 US 201113222029
(43) Date of publication of application: 09.07.2014
(73) Proprietor: The Chemours Company FC, LLC, Wilmington DE 19801 (US)
(72) Inventor: MORI, Makio, Hiratsuka-Shi, Kanagawa 254-0076 (JP)
(74) Representative: Dannenberger, Oliver Andre
(86) International application number: PCT/US2012/044102
(87) International publication number: WO 2013/032571

(56) References cited:
- EP-A1- 0 940 433
- US-A1- 2008 249 240
- US-A1- 2012 095 151

## Description

### FIELD OF THE INVENTION

This invention pertains to a curable fluoroelastomer composition comprising a peroxide curable fluoroelastomer; carbon black having a nitrogen adsorption specific surface area (N2SA) of 25-130 m²/g and a dibutyl phthalate (DBP) absorption of 50-140 ml/100g; and a plasticizer having at least one carbon-carbon double bond and at least one ester group.

### BACKGROUND OF THE INVENTION

Due to tightening emission regulations the proportion of vehicles having turbocharged engines is increasing. Also the temperature to which air ducts are exposed in turbocharged engines is increasing. Fluoroelastomer is typically employed for high temperature air ducts.

Turbocharger hose is subject to repetitive vibration at high temperature during operation. Therefore, the rubber employed in the hose should have sufficient resistance to dynamic fatigue and high temperature. Dynamic fatigue performance is typically estimated by the elongation at break (Eb) at both room temperature and at high temperature. The larger the Eb, the better the fatigue resistance. Eb tends to decrease during static heat aging. Thus, a high initial Eb at room temperature is advantageous in order to ensure adequate performance at high temperatures.

It is possible to make a fluororubber having a high Eb at room temperature of at least 350% by employing a relatively low crosslink density and/or relatively low filler reinforcement. However, it is difficult to obtain the necessary Eb at elevated temperatures by conventional means. Physical properties of rubber at high temperatures are usually governed by a component of internal energy (i.e. energy elasticity), rather than entropy elasticity. Internal energy is mostly attributable to the filler component.

Carbon black is the typical reinforcing filler employed in rubber formulations. Relatively low surface area carbon black (e.g. MT, N990) is typically used in fluoroelastomer formulations and the reinforcement effect is typically low. This results in poor Eb performance at high temperatures for fluoroelastomer compounds. Highly reinforcing carbon black (e.g. HAF, N330) improves the high temperature elongation at break. However, the Mooney viscosity of a fluoroelastomer composition containing highly reinforcing black is often too high to easily extrude into a hose.

Plasticizers are known to decrease the Mooney viscosity of elastomer compositions. However, most plasticizers employed in the rubber industry are fugitive at fluoroelastomer curing temperatures and at the temperatures where turbocharger hoses are employed.

US 2008/249240 A1 relates to an elastomeric composition comprising a peroxide-curable fluoroelastomer, carbon black and a peroxide curative.

EP 0 940 433 A1 describes an elastomer composition comprising an elastomer, a plasticizer, and a curing agent

It would be desirable to have a curable fluoroelastomer composition that yields cured articles having good high temperature Eb and that has a sufficiently low Mooney viscosity to readily process the composition into hose.

### SUMMARY OF THE INVENTION

One aspect of the present invention provides a curable fluoroelastomer composition comprising:
A) peroxide curable fluoroelastomer;
B) 8 to 25 parts by weight, per hundred parts by weight fluoroelastomer, of carbon black having a nitrogen adsorption specific surface area of 25-130 m²/g and a dibutyl phthalate absorption of 50-140 ml/100g;
C) 0.1 to 8 parts by weight, per hundred parts by weight fluoroelastomer, of a plasticizer having at least one carbon-carbon double bond and at least one ester group;
D) 0.25 to 2 parts by weight, per hundred parts by weight fluoroelastomer, of organic peroxide; and
E) 0.3 to 1.3 parts by weight, per hundred parts by weight fluoroelastomer, of a multifunctional coagent.

Another aspect of the invention is a hot air hose made from the above fluoroelastomer composition.

### DETAILED DESCRIPTION OF THE INVENTION

The present invention is directed to a curable fluoroelastomer composition and to hot air hose made therefrom. By "fluoroelastomer" is meant an amorphous elastomeric fluoropolymer. The fluoropolymer contains at least 53 percent by weight fluorine, preferably 63 to 72 wt.% fluorine. Fluoroelastomers that may be employed in the compositions of this invention contain between 25 and 70 weight percent, based on the weight of the fluoroelastomer, of copolymerized units of vinylidene fluoride (VF₂). The remaining units in the fluoroelastomers are comprised of one or more additional copolymerized monomers, different from said VF₂, selected from the group consisting of fluorine-containing olefins, fluorine-containing vinyl ethers, hydrocarbon olefins and mixtures thereof.

Fluorine-containing olefins copolymerizable with the VF₂ include, but are not limited to, hexafluoropropylene (HFP), tetrafluoroethylene (TFE), 1,2,3,3,3-pentafluoropropene (1-HPFP), chlorotrifluoroethylene (CTFE) and vinyl fluoride.

Fluorine-containing vinyl ethers copolymerizable with VF₂ include, but are not limited to perfluoro(alkyl vinyl) ethers. Perfluoro(alkyl vinyl) ethers (PAVE) suitable for use as monomers include those of the formula

CF₂=CFO(R_{f'}O)ₙ(R_{f"}O)ₘR_{f} (I)

where R_{f'} and R_{f"} are different linear or branched perfluoroalkylene groups of 2-6 carbon atoms, m and n are independently 0-10, and R_{f} is a perfluoroalkyl group of 1-6 carbon atoms.

A preferred class of perfluoro(alkyl vinyl) ethers includes compositions of the formula

CF₂=CFO(CF₂CFXO)ₙR_{f} (II)

where X is F or CF₃, n is 0-5, and R_{f} is a perfluoroalkyl group of 1-6 carbon atoms.

A most preferred class of perfluoro(alkyl vinyl) ethers includes those ethers wherein n is 0 or 1 and R_{f} contains 1-3 carbon atoms. Examples of such perfluorinated ethers include perfluoro(methyl vinyl) ether (PMVE) and perfluoro(propyl vinyl) ether (PPVE). Other useful monomers include compounds of the formula

CF₂=CFO[(CF₂)ₘCF₂CFZO]ₙR_{f} (III)

where R_{f} is a perfluoroalkyl group having 1-6 carbon atoms, m = 0 or 1, n = 0-5, and Z = F or CF₃. Preferred members of this class are those in which R_{f} is C₃F₇, m = 0, and n = 1.

Additional perfluoro(alkyl vinyl) ether monomers include those of the formula

CF₂=CFO[(CF₂CF{CF₃}O)ₙ(CF₂CF₂CF₂O)ₘ(CF₂)ₚ]CₓF₂ₓ₊₁ (IV)

where m and n independently = 0-10, p = 0-3, and x = 1-5. Preferred members of this class include compounds where n = 0-1, m = 0-1, and x = 1.

Other examples of useful perfluoro(alkyl vinyl) ethers include

CF₂=CFOCF₂CF(CF₃)O(CF₂O)ₘCₙF₂ₙ₊₁ (V)

where n = 1-5, m = 1-3, and where, preferably, n = 1.

If copolymerized units of PAVE are present in fluoroelastomers employed in this invention, the PAVE content generally ranges from 25 to 75 weight percent, based on the total weight of the fluoroelastomer. If perfluoro(methyl vinyl) ether is used, then the fluoroelastomer preferably contains between 30 and 55 wt.% copolymerized PMVE units.

Other fluoroelastomers that may be employed in the compositions of the invention comprise copolymers of tetrafluoroethylene and a perfluoro(alkyl vinyl) ether, preferably PMVE. Such fluoroelastomers typically contain between 30 and 55 wt.% copolymerized PMVE units.

The fluoroelastomers employed in the compositions of the present invention are peroxide curable, meaning that they contain iodine and/or bromine cure sites. The source of these cure sites may be a copolymerized cure site monomer and/or the result of polymerization of the fluoroelastomer in the presence of a cure site-containing chain transfer agent.

Examples of suitable cure site monomers include: i) bromine - containing olefins; ii) iodine-containing olefins; iii) bromine-containing vinyl ethers; and iv) iodine-containing vinyl ethers.

Brominated cure site monomers may contain other halogens, preferably fluorine. Examples of brominated olefin cure site monomers are CF₂=CFOCF₂CF₂CF₂OCF₂CF₂Br; bromotrifluoroethylene; 4-bromo-3,3,4,4-tetrafluorobutene-1 (BTFB); and others such as vinyl bromide, 1-bromo-2,2-difluoroethylene; perfluoroallyl bromide; 4-bromo-1,1,2-trifluorobutene-1; 4-bromo-1,1,3,3,4,4,-hexafluorobutene; 4-bromo-3-chloro-1,1,3,4,4-pentafluorobutene; 6-bromo-5,5,6,6-tetrafluorohexene; 4-bromoperfluorobutene-1 and 3,3-difluoroallyl bromide. Brominated vinyl ether cure site monomers useful in the invention include 2-bromo-perfluoroethyl perfluorovinyl ether and fluorinated compounds of the class CF₂Br-R_{f}-O-CF=CF₂ (R_{f} is a perfluoroalkylene group), such as CF₂BrCF₂O-CF=CF₂, and fluorovinyl ethers of the class ROCF=CFBr or ROCBr=CF₂ (where R is a lower alkyl group or fluoroalkyl group) such as CH₃OCF=CFBr or CF₃CH₂OCF=CFBr.

Suitable iodinated cure site monomers include iodinated olefins of the formula: CHR=CH-Z-CH₂CHR-I, wherein R is -H or -CH₃; Z is a C₁-C₁₈ (per)fluoroalkylene radical, linear or branched, optionally containing one or more ether oxygen atoms, or a (per)fluoropolyoxyalkylene radical as disclosed in U.S. Patent 5,674,959. Other examples of useful iodinated cure site monomers are unsaturated ethers of the formula: I(CH₂CF₂CF₂)ₙOCF=CF₂ and ICH₂CF₂O[CF(CF₃)CF₂O]ₙCF=CF₂, and the like, wherein n=1-3, such as disclosed in U.S. Patent 5,717,036. In addition, suitable iodinated cure site monomers including iodoethylene, 4-iodo-3,3,4,4-tetrafluorobutene-1 (ITFB); 3-chloro-4- iodo-3,4,4-trifluorobutene; 2-iodo -1,1,2,2-tetrafluoro-1-(vinyloxy)ethane; 2- iodo-1-(perfluorovinyloxy)-1,1,-2,2-tetrafluoroethylene; 1,1,2,3,3,3-hexafluoro-2-iodo-1-(perfluorovinyloxy)propane; 2-iodoethyl vinyl ether; 3,3,4,5,5,5-hexafluoro-4-iodopentene; and iodotrifluoroethylene are disclosed in U.S. Patent 4,694,045. Allyl iodide and 2-iodo-perfluoroethyl perfluorovinyl ether are also useful cure site monomers.

Units of cure site monomer, when present in the fluoroelastomers employed in the invention, are typically present at a level of 0.05-10 wt.% (based on the total weight of fluoroelastomer), preferably 0.05-5 wt.% and most preferably between 0.05 and 3 wt.%.

Additionally or alternatively to copolymerized cure site monomers, iodine-containing endgroups, bromine-containing endgroups or mixtures thereof may optionally be present at one or both of the fluoroelastomer polymer chain ends as a result of the use of chain transfer or molecular weight regulating agents during preparation of the fluoroelastomers. The amount of chain transfer agent, when employed, is calculated to result in an iodine or bromine level in the fluoroelastomer in the range of 0.005-5 wt.%, preferably 0.05-3 wt.%.

Examples of chain transfer agents include iodine-containing compounds that result in incorporation of bound iodine at one or both ends of the polymer molecules. Methylene iodide; 1,4-diiodoperfluoro-n-butane; and 1,6-diiodo-3,3,4,4,tetrafluorohexane are representative of such agents. Other iodinated chain transfer agents include 1,3-diiodoperfluoropropane; 1,6-diiodoperfluorohexane; 1,3-diiodo-2-chloroperfluoropropane; 1,2-di(iododifluoromethyl)-perfluorocyclobutane; monoiodoperfluoroethane; monoiodoperfluorobutane; 2-iodo-1-hydroperfluoroethane, etc. Also included are the cyano-iodine chain transfer agents disclosed in European Patent 0868447A1. Particularly preferred are diiodinated chain transfer agents.

Examples of brominated chain transfer agents include 1-bromo-2-iodoperfluoroethane; 1-bromo-3-iodoperfluoropropane; 1-iodo-2-bromo-1,1-difluoroethane and others such as disclosed in U.S. Patent 5,151,492.

Specific fluoroelastomers which may be employed in this invention include, but are not limited to those having at least 53 wt.% fluorine and comprising copolymerized units of i) vinylidene fluoride and hexafluoropropylene; ii) vinylidene fluoride, hexafluoropropylene and tetrafluoroethylene, iii) vinylidene fluoride, perfluoro(methyl vinyl) ether and tetrafluoroethylene and iv) tetrafluoroethylene and perfluoro(methyl vinyl) ether. For simplicity, iodine and/or bromine -containing cures sites are not shown on these copolymers. However, it is understood that these fluoroelastomers are peroxide curable so they contain iodine and/or bromine cure sites as described above.

The carbon black filler employed in this invention has a specific range of nitrogen adsorption specific surface area (ASTM D-6556) of 25-130 (preferably 25-80) m²/g and a dibutylphthalate absorption (ASTM D-2414) of 50-140 (preferably 90-125) ml/100 g. Examples of such types of carbon black include, but are not limited to HAF (ASTM N330), ISAF (ASTM N220), SAF (ASTM N110), SRF-HS-HM (N774) and FEF (N550). FEF is preferred. Mixtures of various carbon blacks may be employed.

The amount of carbon black employed in the curable compositions of this invention is 8 to 25 (preferably 15 to 20) parts by weight per hundred parts by weight fluoroelastomer.

Plasticizers that may be employed in the present invention are those that comprise at least one carbon-carbon double bond and at least one ester group. Typically the plasticizer contains at least one acrylate, methacrylate or ethacrylate group. Specific examples of such plasticizers include, but are not limited to trimethylolpropane trimethacrylate, polyhydric alcohol ethacrylate, polyhydric alcohol methacrylate and polyhydric alcohol acrylate. The amount of plasticizer employed is 0.1 to 8 (preferably 1 to 4) parts by weight plasticizer per hundred parts by weight fluoroelastomer.

Fluoroelastomer, carbon black and plasticizer are combined in an internal mixer (e.g. Banbury®, Kneader or Intermix®). Other ingredients (except for organic peroxide) may also be combined at this time.

The level of curative employed to crosslink the fluoroelastomer compositions employed in this invention is set to balance properties such as elongation at break and compression set. The lower the level of curative, the higher the elongation at break, but low levels of curative cause undesirably high compression set at elevated temperatures.

The level of multifunctional coagent (e.g. triallyl isocyanurate, triallyl cyanurate or trimethallyl isocyanurate) is 0.3-1.3, preferably 0.5-1.0, parts by weight, per hundred parts by weight fluoroelastomer.

Organic peroxides suitable for use in the compositions of the invention include, but are not limited to 1,1-bis(t-butylperoxy)-3,5,5-trimethylcyclohexane; 1,1-bis(t-butylperoxy)cyclohexane; 2,2-bis(t-butylperoxy)octane; n-butyl-4, 4-bis(t-butylperoxy)valerate; 2,2-bis(t-butylperoxy)butane; 2,5-dimethylhexane-2,5-dihydroxyperoxide; di-t-butyl peroxide; t-butylcumyl peroxide; dicumyl peroxide; alpha, alpha'-bis(t-butylperoxy-m-isopropyl)benzene; 2,5-dimethyl-2,5-di(t-butylperoxy)hexane; 2,5-dimethyl-2,5-di(t-butylperoxy)hexene-3; benzoyl peroxide, t-butylperoxybenzene; 2,5-dimethyl-2,5-di(benzoylperoxy)-hexane; t-butylperoxymaleic acid; and t-butylperoxyisopropylcarbonate. Preferred examples of organic peroxides include 2,5-dimethyl-2,5-di(t-butylperoxy)hexane, dicumyl peroxide, and alpha, alpha'-bis(t-butylperoxy-m-isopropyl)benzene. The level of organic peroxide is 0.25-2, preferably 0.7-1.5, parts by weight, per hundred parts by weight fluoroelastomer.

Organic peroxide curative is added to the fluoroelastomer, carbon black, plasticizer mixture at a temperature below 120°C in order to prevent premature vulcanization. Typically, peroxide is added on a roll mill, rather than in the internal mixer. The resulting curable composition has a Mooney viscosity, ML(1 +4) at 100°C, of 80 or less. Mooney viscosity is measured according to JIS K6300.

The curable composition is then shaped (e.g. extruded) and cured in order to manufacture the cured hot air hose of the invention. The fluoroelastomer may form the entire hose, or more likely, the inner layer of a multilayer hose. Typical curing conditions are 10 minutes at 180°C in a press, followed by 4 hours at 200°C in an air oven.

Optionally, the cured hot air hoses of the invention may contain further ingredients commonly employed in the rubber industry such as process aids, colorants, acid acceptors, etc.

Cured (i.e. crosslinked) hot air hoses of this invention (e.g. turbocharger hoses) have a remarkable balance of heat resistance and mechanical performance. Cured rubber made from the compositions of the invention exhibits elongation at break (Eb) greater than or equal to 120% (preferably ≥ 130%) at 230°C. Hardness (Duro A, JIS K6253) at 23°C is 73 to 85 points. The change in hardness after oven heat aging at 230°C for 168 hours (measured according to JIS K6257) is 8 points or less. Compression set after 25% compression at 230°C for 70 hours (large specimen, measured according to JIS K6262) is less than or equal to 70%.

The fluoroelastomer compounds described above are also useful in other applications requiring dynamic fatigue resistance at high temperature, e.g. diaphragms.

### EXAMPLES

**TEST METHODS**

| | |
|---|---|
| Mooney viscosity | JIS K6300 |
| Duro A hardness | JIS K6253 |
| Tensile properties | JIS K 6251 |
| Compression set | JIS K6262 |

The invention is further illustrated by, but is not limited to, the following examples.

### Example 1

Curable compositions of the invention (Samples 1-4) and comparative compositions (Samples A-F) were made in a 1.0 L Kneader internal mixer. First, fluoroelastomer was added to the mixing chamber and mixing was begun. After polymer temperature was at least 90°C, the other ingredients, except for the organic peroxide, were added. Mixing was at a rotor speed of 40-60 rpm for several minutes. If the temperature of the composition increased above 130°C, mixing was slowed. The composition was dumped. A band of the composition was then made on a roll mill and the organic peroxide was added to form a curable composition.

Formulations are shown in Table I. Mooney viscosities and physical properties of cured slab sheets are shown in Table II. Slab sheets were press cured at 180°C for 10 minutes, followed by a post cure in an oven at 200°C for 4 hours.

| TABLE I | | | | | | | | | | |
|---|---|---|---|---|---|---|---|---|---|---|
| Formulation, phr¹ | Sample A | Sample 1 | Sample 2 | Sample 3 | Sample 4 | Sample B | Sample C | Sample D | Sample E | Sample F |
| Fluoroelastomer² | 100 | 100 | 100 | 100 | 100 | 100 | 100 | 100 | 100 | 100 |
| MgO | 6 | 6 | 6 | 6 | 6 | 6 | 6 | 6 | 6 | 6 |
| MT (N990)³ | 20 | 0 | 0 | 0 | 0 | 0 | 0 | 0 | 0 | 0 |
| SRF (N774)⁴ | 0 | 20 | 0 | 0 | 0 | 0 | 0 | 0 | 0 | 0 |
| FEF (N550)⁵ | 0 | 0 | 20 | 15 | 0 | 5 | 30 | 15 | 15 | 15 |
| HAF (N330)⁶ | 0 | 0 | 0 | 0 | 10 | 0 | 0 | 0 | 0 | 0 |
| Process aid⁷ | 1 | 1 | 1 | 1 | 1 | 1 | 1 | 1 | 1 | 1 |
| Organic peroxide⁸ | 1 | 1 | 1 | 1 | 1 | 1 | 1 | 1 | 1 | 1 |
| Coagent⁹ | 1 | 0.8 | 0.5 | 0.8 | 0.6 | 1 | 0.5 | 0.8 | 0.8 | 0.8 |
| Placticizer¹⁰ | 3 | 3 | 3 | 3 | 3 | 3 | 3 | 0 | 10 | 0 |
| Plasticizer¹¹ | 0 | 0 | 0 | 0 | 0 | 0 | 0 | 0 | 0 | 3 |

| | | | | | | | | | | |
|---|---|---|---|---|---|---|---|---|---|---|
| ¹ parts by weight ingredient per 100 parts by weight rubber, i.e. fluoroelastomer ² Viton® GBL200S available from DuPont ³ Thermax N990 available from Cancarb Ltd. ⁴ Asahi #50 available from Asahi Carbon ⁵ Asahi #60 available from Asahi Carbon ⁶ Asahi #70 available from Asahi Carbon ⁷ HT-290 process aid available from Struktol ⁸ Perhexa 25B40 available from Akzo ⁹ triallyl isocyanurate available as Diak 7 from DuPont ¹⁰ SR350 trimethylolpropane methacrylate, available from Sartomer ¹¹ ADK Cizer RS-735 conventional plasticizer (polyether ester), available from Adeka | | | | | | | | | | |

**TABLE II**

| | Sample A | Sample 1 | Sample 2 | Sample 3 | Sample 4 | Sample B | Sample C | Sample D | Sample E | Sample F |
|---|---|---|---|---|---|---|---|---|---|---|
| Mooney viscosity, ML(1+4) @100°C | 56.4 | 67.4 | 79.2 | 68.8 | 62.4 | 53.8 | 100.9 | 88.8 | 39 | 71.5 |
| Duro A hardness @ 25°C, points | 71 | 78 | 81 | 76 | 73 | 67 | 87 | 72 | 87 | 69 |
| Eb @230°C, % | 90 | 120 | 150 | 140 | 170 | 110 | 130 | 100 | 70 | 190 |
| Change in hardness after 168 hours @ 230°C, points | +1 | +3 | +4 | +4 | +4 | -1 | +6 | +5 | -2 | +11 |
| Compression set, 70 hours, 230°C, 25% compression, % | 37 | 48 | 63 | 48 | 57 | 31 | 77 | 42 | 46 | 98 |

## Claims

1. A curable fluoroelastomer composition comprising:
A) peroxide curable fluoroelastomer;
B) 8 to 25 parts by weight, per hundred parts by weight fluoroelastomer, of carbon black having a nitrogen adsorption specific surface area of 25-130 m²/g and a dibutyl phthalate absorption of 50-140 ml/100g;
C) 0.1 to 8 parts by weight, per hundred parts by weight fluoroelastomer, of a plasticizer having at least one carbon-carbon double bond and at least one ester group;
D) 0.25 to 2 parts by weight, per hundred parts by weight fluoroelastomer, of organic peroxide; and
E) 0.3 to 1.3 parts by weight, per hundred parts by weight fluoroelastomer, of a multifunctional coagent.

2. The curable composition of claim 1 wherein said plasticizer comprises at least one acrylate selected from the group consisting of acrylate, methacrylate and ethacrylate.

3. The curable composition of claim 2 wherein said plasticizer is selected from the group consisting of trimethylolpropane trimethacrylate, polyhydric alcohol ethacrylate, polyhydric alcohol methacrylate and polyhydric alcohol acrylate.

4. The curable composition of any one of claims 1 to 3 wherein said carbon black is selected from the group consisting of HAF, ISAF SAF, SRF-HS-HM and FEF.

5. The curable composition of any one of claims 1 to 4 having a Mooney viscosity measured according to JIS K6300, ML(1+4) at 100°C, of up to 80.

6. A cured high temperature air hose made from the composition of any one of claims 1 to 5.

7. The high temperature air hose of claim 6 having an elongation at break at 230°C, according to JIS K6251, of at least 120%.

8. The high temperature air hose of claim 6 or 7 having a Duro A hardness at 23°C, according to JIS K6253, of 73 to 85 points.

9. The high temperature air hose of any one of claims 6 to 8 having a change in hardness after oven heat aging at 230°C for 168 hours, measured according to JIS K6257, of 8 points or less.

10. The high temperature air hose of any one of claims 6 to 9 having a compression set after 25% compression at 230°C for 70 hours (large specimen, measured according to JIS K6262) of 70% or less.

## Patentansprüche

1. Härtbare Fluorelastomerzusammensetzung, umfassend:
A) mit Peroxid härtbares Fluorelastomer;
B) 8 bis 25 Gewichtsteile, pro Hundert Gewichtsteile Fluorelastomer, Ruß, der einen für Stickstoffadsorption spezifischen Oberflächenbereich von 25 - 130 m²/g und eine Dibutylphthalatadsorption von 50-140 ml/100 g aufweist;
C) 0,1 bis 8 Gewichtsteile, pro Hundert Gewichtsteile Fluorelastomer, eines Weichmachers, der mindestens eine Kohlenstoff-Kohlenstoff-Doppelbindung und mindestens eine Estergruppe aufweist;
D) 0,25 bis 2 Gewichtsteile, pro Hundert Gewichtsteile Fluorelastomer, organisches Peroxid; und
E) 0,3 bis 1,3 Gewichtsteile, pro Hundert Gewichtsteile Fluorelastomer, eines multifunktionellen Coagens.

2. Härtbare Zusammensetzung nach Anspruch 1, wobei der Weichmacher mindestens ein Acrylat umfasst, ausgewählt aus der Gruppe, bestehend aus Acrylat, Methacrylat und Ethacrylat.

3. Härtbare Zusammensetzung nach Anspruch 2, wobei der Weichmacher aus der Gruppe ausgewählt ist, bestehend aus Trimethylolpropantrimethacrylat, mehrwertigem Alkokolethacrylat, mehrwertigem Alkoholmethacrylat und mehrwertigem Alkoholacrylat.

4. Härtbare Zusammensetzung nach einem der Ansprüche 1 bis 3, wobei der Ruß aus der Gruppe ausgewählt ist, bestehend aus HAF, ISAF, SAF, SRF-HS-HM und FEF.

5. Härtbare Zusammensetzung nach einem der Ansprüche 1 bis 4, die eine Mooney-Viskosität, JIS K6300, ML(1+4) entsprechend bei 100 °C gemessen, von bis zu 80 aufweist.

6. Gehärteter Hochtemperaturluftschlauch, der aus der Zusammensetzung nach einem der Ansprüche 1 bis 5 hergestellt ist.

7. Hochtemperaturluftschlauch nach Anspruch 6, der eine Bruchdehnung bei 230 °C, JIS K6251 entsprechend, von mindestens 120 % aufweist.

8. Hochtemperaturluftschlauch nach Anspruch 6 oder 7, der eine Duro A-Härte bei 23 °C, JIS K6253 entsprechend, von 73 bis 85 Punkten aufweist.

9. Hochtemperaturluftschlauch nach einem der Ansprüche 6 bis 8, der eine Änderung der Härte nach Ofenwärmealtern bei 230 °C 168 Stunden lang, JIS K6257 entsprechend gemessen, von 8 Punkten oder weniger aufweist.

10. Hochtemperaturluftschlauch nach einem der Ansprüche 6 bis 9, der einen Druckverformungsrest nach 25 % Komprimierung bei 230 °C 70 Stunden lang (großer Prüfkörper, JIS K6262 entsprechend gemessen) von 70 % oder weniger aufweist.

## Revendications

1. Composition durcissable d'élastomère fluoré comprenant:
A) un élastomère fluoré durcissable avec un peroxyde;
B) de 8 à 25 parties en poids, pour cent parties en poids d'élastomère fluoré, de noir de carbone présentant une surface spécifique d'adsorption d'azote de 25 à 130 m²/g et d'absorption du dibutyl phtalate de 50 à 140 ml/100 g;
C) de 0,1 à 8 parties en poids, pour cent parties en poids d'élastomère fluoré, d'un agent plastifiant ayant au moins une double liaison carbone-carbone et au moins un groupe ester;
D) de 0,25 à 2 parties en poids, pour cent parties en poids d'élastomère fluoré, de peroxyde organique; et
E) de 0,3 à 1,3 partie en poids, pour cent parties en poids d'élastomère fluoré, d'un coagent multifonctionnel.

2. Composition durcissable selon la revendication 1, dans laquelle ledit agent plastifiant comprend au moins un acrylate sélectionné dans le groupe constitué de l'acrylate, du méthacrylate et de l'éthacrylate.

3. Composition durcissable selon la revendication 2, dans laquelle ledit agent plastifiant est sélectionné dans le groupe constitué du triméthacrylate de triméthylolpropane, de l'éthacrylate de poly(alcool hydrique), du méthacrylate de poly(alcool hydrique) et de l'acrylate de poly(alcool hydrique).

4. Composition durcissable selon l'une quelconque des revendications 1 à 3, dans laquelle ledit noir de carbone est sélectionné dans le groupe constitué de HAF, ISAF SAF, SRF-HS-HM et FEF.

5. Composition durcissable selon l'une quelconque des revendications 1 à 4 présentant une viscosité de Mooney mesurée selon la norme JIS K6300, ML(1+4) à 100°C, allant jusqu'à 80.

6. Tuyau durci à l'air sous température élevée fabriqué à partir de la composition selon l'une quelconque des revendications 1 à 5.

7. Tuyau à l'air sous température élevée selon la revendication 6 présentant un allongement à la rupture à 230°C, selon la norme JIS K6251, d'au moins 120 %.

8. Tuyau à l'air sous température élevée selon la revendication 6 ou 7 présentant une dureté Duro A à 23°C, selon la norme JIS K6253, de 73 à 85 points.

9. Tuyau à l'air sous température élevée selon l'une quelconque des revendications 6 à 8 présentant un changement de dureté après vieillissement à la chaleur en étuve à 230°C durant 168 heures, mesuré selon la norme JIS K6257, de 8 points ou moins.

10. Tuyau à l'air sous température élevée selon l'une quelconque des revendications 6 à 9 présentant une rémanence à la compression après 25 % de compression à 230°C durant 70 heures (échantillon de grande taille, mesurée selon la norme JIS K6262) de 70 % ou moins.
